# EUROPEAN PATENT APPLICATION

(11) **EP 4 742 489 A1**
(43) Date of publication of application: **13.05.2026**
(21) Application number: 24856579.8
(22) Date of filing: 22.04.2024
(51) Int. Cl.: H02J 7/00

(54) **ELECTRONIC DEVICE FOR SUPPLYING POWER TO LOAD CIRCUIT OR BATTERY**

(30) Priority: 22.08.2023 KR 20230109499; 07.09.2023 KR 20230118947
(71) Applicant: Samsung Electronics Co., Ltd., Suwon-si, Gyeonggi-do 16677 (KR)
(72) Inventor: KIM, Kyoungwon, Suwon-si, Gyeonggi-do 16677 (KR); SON, Kwanbae, Suwon-si, Gyeonggi-do 16677 (KR); KIM, Minjae, Suwon-si, Gyeonggi-do 16677 (KR)
(74) Representative: Gulde & Partner
(86) International application number: PCT/KR2024/005377
(87) International publication number: WO 2025/041959

(57) **Abstract**

This electronic device may be configured such that, on the basis of a first specific event occurring while a power conversion circuit is being used to charge a first battery and a second battery, a controller: deactivates the power conversion circuit; communicates with a power supply device via a communication circuit to set the output voltage value of a power signal to be output, set the maximum input current value of a power signal to be supplied to a load circuit via the power conversion circuit, set a first current limiting circuit to a first switching state so that the first battery can be discharged without being charged, and set a second current limiting circuit to a second switching state so that the second battery can be discharged without being charged; and then activates the power conversion circuit.

## Description

### [Technical Field]

Embodiments of the present disclosure relate to an electronic device for supplying power to a load circuit or a battery.

### [Background Art]

A power supply device (e.g., a travel adapter (TA)) may perform power delivery (PD) communication with an electronic device via a cable and supply power to the electronic device. A power receiving device (e.g., a smartphone) may use power input from the power supply device to charge a battery of the power receiving device and supply power to a load circuit (in other words, system) of the power receiving device. For example, the power input from the power supply device to the power receiving device may be distributed to the battery and/or load circuit via a charging circuit of the power receiving device. When the power consumed by the load circuit is greater than the power supplied to the load circuit, power from the battery may be discharged to the load circuit to balance supply and consumption. When the power consumption is relatively low, a portion of the supplied power may be supplied to the battery, thereby charging the battery.

The above-described information may be provided as related art for the purpose of assisting in understanding the present disclosure. No assertion or determination is made as to whether any of the above-described contents is applicable as prior art related to the present disclosure.

### [Disclosure of Invention]

### [Technical Problem]

The electronic device may include a direct charging circuit and/or a switching charging circuit. The electronic device may set an input voltage value (a voltage value of the power input from the power supply device to the electronic device) via the PD communication with the power supply device. The electronic device may change an output voltage value (a voltage value of the power output from the battery) using the switching charging circuit while charging the battery using the power received from the power supply device. The switching charging circuit may be configured to change a ratio (a voltage conversion ratio) of an output voltage to an input voltage. In the direct charging circuit, the voltage conversion ratio may be fixed. For example, the direct charging circuit may be configured to output an input voltage bucked by 1/N times and an input current increased by N times. The electronic device may change the output voltage value of power output from the direct charging circuit to the battery by changing the input voltage value via the PD communication with the power supply device while charging the battery using the power received from the power supply device.

The power supply device may support a function for regulating the output voltage, namely programmable power supply (PPS). The power supply device supporting the PPS may transmit, to the electronic device, a power signal having voltage value requested by the electronic device within a designated voltage range (e.g., 3.3 to 11 V, 3.3 to 20 V). When the electronic device recognizes the power supply device connected via the connector as a PPS-supported model, the electronic device may charge the battery and supply power to the load circuit using the direct charging circuit.

The battery voltage increases as the battery is charged. The electronic device may charge the battery in a constant current (CC) mode or a constant voltage (CV) mode, depending on the battery voltage. In the CC mode, the electronic device may maintain the current supplied to the battery at a preset value. In the CV mode, the electronic device may maintain the battery voltage at a preset value. For example, the electronic device may charge the battery in the CC mode when the battery voltage is below a threshold voltage value, and charge the battery in the CV mode when the battery voltage is greater than or equal to the threshold voltage value.

The load circuit may consume a relatively large amount of power while applications (e.g., games, video recording) requiring high-specification performance are running. In this case, when a PPS-supported power supply device is connected to the electronic device, the battery charging may be performed in the CV mode to ensure that most of the power output from the direct charging circuit is supplied to the load circuit. Even if the battery charging is performed in the CV mode, a portion of the power may be distributed to the battery side, and as a result, heat may be generated due to power losses along a charging path from the direct charging circuit to the battery. The heat generation may result in voice of customer (VOC) (e.g., user complaints about excessive heat during gaming). In order to perform the battery charging in the constant voltage (CV) mode, the battery voltage needs to be periodically monitored, which results in a problem of power consumption. The current value of the power output from the direct charging circuit may be limited to a designated threshold current value (in other words, a current value required for battery warranty) to protect the battery from overcurrent. For example, when a current (C)-rate, which is a measure representing a speed required to charge a battery, is 1.3 and a rated capacity value of a battery is 3700 mAh, a threshold current value may be set to approximately 2.164 A. The threshold current value may be lower than a current value (e.g., 3 A or 5 A) that the power supply device may maximally supply without interrupting charging. Limiting the current value within the threshold current value may result in VOC (e.g., user complaints about limited gaming performance).

In an embodiment of the present disclosure, by supplying power to the load circuit rather than to the battery, the electronic device may suppress heat generation and power consumption for monitoring the battery voltage. The electronic device may exhibit high performance by supplying power to a load circuit having a current value (e.g., a current value that the power supply device may maximally supply) greater than the threshold current value.

The technical problems to be achieved by the present disclosure are not limited to the above-described technical problems. That is, other technical problems that are not described may be obviously understood by those skilled in the art to which the present disclosure pertains from the following description.

### [Solution to Problem]

According to an embodiment, an electronic device includes: a connector including a power terminal and a data terminal; a communication circuit connected to the data terminal; a power conversion circuit configured to lower a voltage of a power signal input from a power supply device through the power terminal by 1/N times and output a current increased by N times; a battery module including a pair of a first battery and a first current limiting circuit and another pair of a second battery and a second current limiting circuit; a controller; and a load circuit. The first battery may be connected to an output terminal of the power conversion circuit via the first current limiting circuit. The second battery may be connected to an output terminal of the power conversion circuit via the second current limiting circuit. The load circuit may be connected in parallel to the output terminal of the power conversion circuit together with the first battery and the second battery. The controller may deactivate the power conversion circuit based on an occurrence of a first specific event while the power conversion circuit is used to charge the first battery and the second battery. The controller may perform communication with the power supply device via the communication circuit to set an output voltage value of a power signal to be output by the power supply device. The controller may set a maximum input current value of a power signal to be supplied to the load circuit via the power conversion circuit. The controller may set the first current limiting circuit to a first switching state so that the first battery is dischargeable without being charged. The controller may set the second current limiting circuit to a second switching state so that the second battery is dischargeable without being charged. The controller may activate the power conversion circuit after the first current limiting circuit is set to the first switching state and the second current limiting circuit is set to the second switching state.

According to an embodiment, an electronic device includes: a connector including a power terminal and a data terminal; a communication circuit connected to the data terminal; a power conversion circuit configured to lower a voltage of a power signal input from a power supply device through the power terminal by 1/N times and output a current increased by N times; a battery module including a pair of a first battery and a first current limiting circuit and another pair of a second battery and a second current limiting circuit; a controller; a load circuit; and a memory storing instructions. The first battery may be connected to an output terminal of the power conversion circuit via the first current limiting circuit. The second battery may be connected to an output terminal of the power conversion circuit via the second current limiting circuit. The load circuit may be connected in parallel to the output terminal of the power conversion circuit together with the first battery and the second battery. The instructions, when executed by the controller, may cause the electronic device to deactivate the power conversion circuit based on the occurrence of the first specific event (310) while the power conversion circuit is used to charge the first battery and the second battery. The instructions may cause the electronic device to perform communication with the power supply device via the communication circuit to set an output voltage value of a power signal to be output by the power supply device. The instructions may cause the electronic device to set a maximum input current value of a power signal to be supplied to the load circuit via the power conversion circuit. The instructions may cause the electronic device to set the first current limiting circuit to a first switching state so that the first battery is dischargeable without being charged. The instructions may cause the electronic device to set the second current limiting circuit to a second switching state so that the second battery is dischargeable without being charged. The instructions may cause the electronic device to activate the power conversion circuit after the first current limiting circuit is set to the first switching state and the second current limiting circuit is set to the second switching state.

### [Advantageous Effects of Invention]

According to an embodiment of the present disclosure, it is possible to provide an electronic device that may suppress heat generation and power consumption for monitoring a battery voltage by supplying power to a load circuit rather than to a battery. According to an embodiment of the present disclosure, it is possible to provide an electronic device that exhibits high performance by supplying power with a current value greater than a threshold current value to a load circuit. In addition, various effects that may be directly or indirectly identified through the present document may be provided.

### [Brief Description of Drawings]

FIG. 1 is a block diagram of an electronic device in a network environment according to various embodiments.
FIG. 2 is a block diagram of a power receiving device configured to charge a battery and supply power to a load circuit using power received from a power supply device, according to an embodiment.
FIG. 3 is a flowchart for describing operations for causing a power receiving device to perform a pass through mode while a first power conversion circuit is being used to convert power input from a power supply device, according to an embodiment.
FIG. 4 is a diagram illustrating a state of the power receiving device set to the pass through mode.
FIG. 5 is a flowchart for describing operations for causing the power receiving device to release the pass through mode and perform a charging mode while the first power conversion circuit is being used to convert the power input from the power supply device, according to an embodiment.
FIG. 6 is a diagram illustrating a state of a power receiving device set to a charging mode.
FIG. 7 is a flowchart for describing operations for regulating an input voltage according to a state of charge of a battery module while the power receiving device is performing the pass through mode, according to an embodiment.

Hereinafter, embodiments of the disclosure will be described in detail with reference to the drawings so that those skilled in the art to which the disclosure pertains may easily practice the disclosure. However, the present disclosure may be implemented in various different forms, and is not limited to the embodiments described herein. Throughout the accompanying drawings, identical or similar components will be denoted by identical or similar reference numerals. In addition, in the drawings and the related description, descriptions of well-known functions and configurations may be omitted for clarity and conciseness.

### [Mode for the Invention]

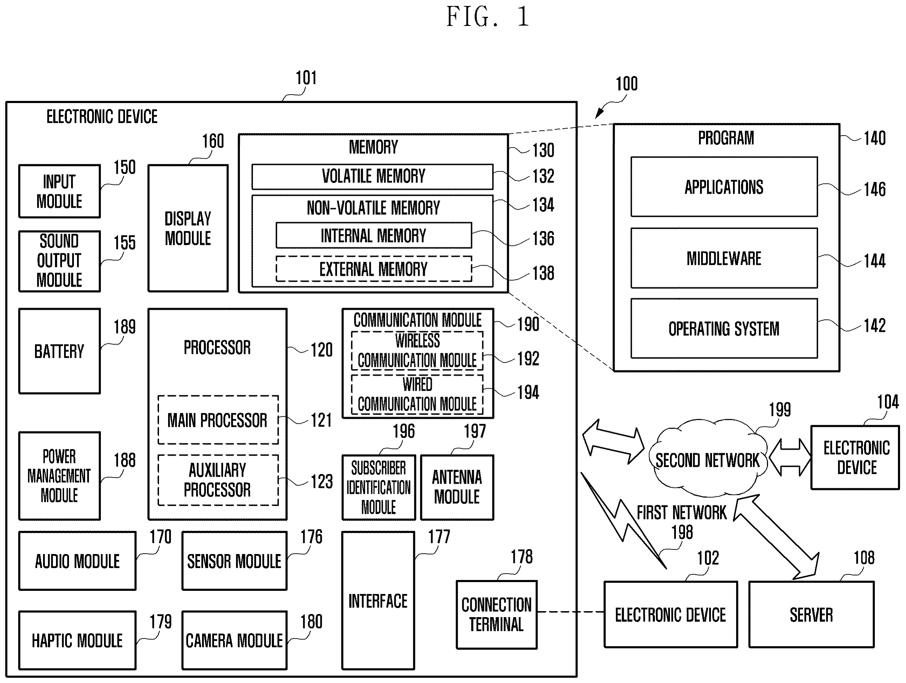

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), a secure processing unit (SPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

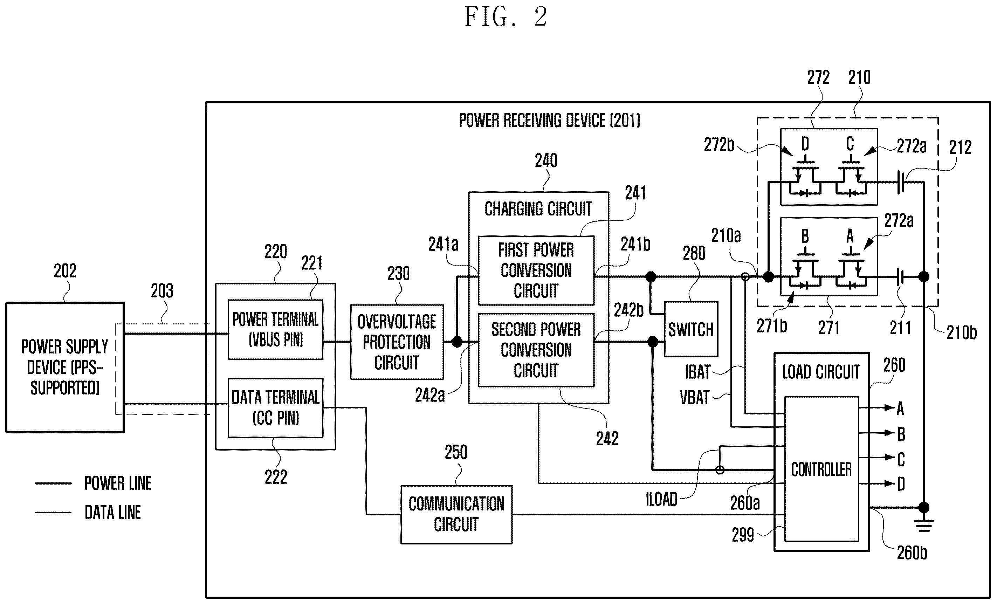

FIG. 2 is a block diagram of a power receiving device 201 configured to charge a battery and supply power to a load circuit using power received from a power supply device 202, according to an embodiment. The power receiving device 201 may be connected to the power supply device 202 via a cable (e.g., a USB type-C cable) 203 that supports data communication and power reception.

Referring to FIG. 2, the power receiving device 201 (e.g., the electronic device 101 of FIG. 1) may include a battery module 210, a connector 220, an overvoltage protection circuit 230, a charging circuit 240, a communication circuit 250, a load circuit 260, and a switch 280. The load circuit (in other words, system) 260 is a general term for electronic components that are driven using a power signal received via the charging circuit 240 and/or a power signal received from the battery 210, and may include a controller (in other words, a control circuit) 299, memory, a display (e.g., the display module 160 of FIG. 1), and/or a camera (e.g., the camera module 180 of FIG. 1), etc. The battery module (in other words, a battery set or a battery pack) 210 may include a pair of a first battery 211 and a first current limiting circuit 271 and another pair of a second battery 212 and a second current limiting circuit 272. Although not illustrated, the battery module 210 may further include a third or higher battery and a current limiting circuit paired with the battery.

The connector 220 (e.g., the connection terminal 178 of FIG. 1) may include a power terminal 221 for receiving the power signal from the power supply device 202 and a data terminal 222 for data communication with the power supply device 202. For example, the connector 220 may include a socket according to a universal serial bus (USB) type-C. A socket of the connector 220 may be coupled with a plug of the cable 203. Among the pins of the USB type-C socket, a VBUS pin may be used as the power terminal 221, and a configuration channel (CC) pin and/or differential signal pins DP (D+) and DN (D-) may be used as the data terminal 222.

The overvoltage protection circuit 230 is connected to a power line connecting between the power terminal 221 of the connector 220 and the charging circuit 240 to block overvoltage from flowing into the charging circuit 240 (or lower the voltage input to the charging circuit 240), thereby preventing damage to electronic components (e.g., the charging circuit 240, the load circuit 260). For example, the overvoltage protection circuit 230 may include a Zener diode.

The charging circuit 240 may support constant current (CC) and constant voltage (CV) charging based on the control of the controller 299. For example, while the charging mode is set to the CC mode, the charging circuit 240 may constantly maintain a current of a power signal output from the charging circuit 240 at a charging current value set by the controller 299 when the voltage (e.g., a voltage difference between an anode (+) and a cathode (-) of the battery) of the battery 210 is less than a designated target voltage value. For example, the target voltage value may refer to the voltage of the battery 210 when the battery is fully charged. The full charge may refer to a state of charge (SOC) when the charge amount of the battery reaches 100%, which is a set maximum capacity, without concern of burnout or explosion. As another example, the target voltage value may be a designated voltage (e.g., a voltage corresponding to 98% of the maximum capacity). During battery charging, when a voltage (VBAT) at a first battery terminal 210a of the battery module 210 reaches a target voltage value, a charging mode may be switched to a CV mode. When the voltage of the battery 210 reaches the target voltage value and the charging mode is switched from the CC mode to the CV mode, the charging circuit 240 may lower the current value of the power signal output from the charging circuit 240 based on the control of the controller 299 so that the input voltage (VBAT) of the battery module 210 is maintained at the target voltage value. When a current (IBAT) of the power signal input from the charging circuit 240 to the first battery terminal 210a of the battery module 210 while the battery module 210 is being charged in the CV mode is lowered up to a designated current value (e.g., a topoff current value) for charging completion, the charging circuit 240 may stop outputting the power signal to the battery module 210 based on the control of the controller 299, thereby completing the charging of the battery module 210.

The charging circuit 240 may include a first power conversion circuit (in other words, a direct charging circuit) 241 and a second power conversion circuit (in other words, a switching charging circuit) 242. The power receiving device 201 may be configured so that the current output from the first power conversion circuit 241 or the second power conversion circuit 242 may be distributed to the battery module 210 and the load circuit 260. According to an embodiment, the current output from the first power conversion circuit 241 may be configured to be distributed to the load circuit 260 via the switch 280. The current output from the second power conversion circuit 242 may be configured to be distributed to the battery module 210 via the switch 280.

The first power conversion circuit 241 includes a first terminal 241a and a second terminal 241b through which power is input and output. The first terminal 241a may be electrically connected to the power terminal 221 of the connector 220. The second terminal 241b may be electrically connected to the battery module 210 and the load circuit 260. The first battery 211 and the second battery 212 may be connected in parallel to the second terminal 241b. Here, the term "parallel" means that the electrical elements are connected to one terminal so that a current output from one terminal (the second terminal 241b) is distributed to the electrical elements (the first battery 211 and the second battery 212). For example, the first battery terminal 210a of the battery module 210 may be connected to the second terminal 241b of the first power conversion circuit 241. A positive electrode (anode) of the first battery 211 and an anode of the second battery 212 may be connected to the first battery terminal 210a so that the current output from the second terminal 241b is distributed and input to the anode of the first battery 211 and the anode of the second battery 212. A negative electrode (cathode) of the first battery 211 and a cathode of the second battery 212 may be connected to a second battery terminal 210b of the battery module 210, and the second battery terminal 210b may be connected to a ground of the power receiving device 201. According to an embodiment, the anode of the first battery 211 may be connected to the second terminal 241b via the first current limiting circuit 271. The anode of the second battery 212 may be connected to the second terminal 241b via the second current limiting circuit 272. According to an embodiment, an input terminal 260a of the load circuit 260 may also be connected in parallel to the second terminal 241b of the first power conversion circuit 241 along with the anode of the first battery 211 and the anode of the second battery 212. An output terminal 260b of the load circuit 260 may be connected to the ground of the power receiving device 201.

According to an embodiment, the first current limiting circuit 271 may be configured to prevent power from being charged to or discharged from the first battery 211. For example, the first current limiting circuit 271 may include a first charge prevention switch 271a and a first discharge prevention switch 271b connected in series to the anode of the first battery 211. Here, the series means that electronic elements are connected between the two terminals so that a current output from one terminal (e.g., a second terminal 241b or a fourth terminal 242b) sequentially passes via several electronic elements (the first discharge prevention switch 271b and the first charge prevention switch 271a) and is input to another terminal (the anode of the first battery 211). The first charge prevention switch 271a may be opened or closed according to a voltage level of a control signal A received from the controller 299. For example, when the voltage of the control signal A is a high level higher than a designated threshold voltage value, the first charge prevention switch 271a is in a closed state, and as a result, power may be charged to the first battery 211. When the voltage of the control signal A is a low level lower than the designated threshold voltage value, the first charge prevention switch 271a is in an opened state, and as a result, power may be prevented from being charged to the first battery 211. The first discharge prevention switch 271b may be opened or closed according to a voltage level of a control signal B received from the controller 299. For example, when the voltage of the control signal B is a high level higher than the designated threshold voltage value, the first discharge prevention switch 271b is in a closed state, and as a result, power of the first battery 211 may be discharged. When the voltage of the control signal B is a low level lower than the designated threshold voltage value, the first discharge prevention switch 271b is in an opened state, and as a result, the power of the first battery 211 may be prevented from being discharged.

According to an embodiment, the first charge prevention switch 271a may include a first field effect transistor (FET) and a first diode. The first discharge prevention switch 271b may include a second FET and a second diode. A source terminal of the first FET may be configured to be connected to the anode of the first battery 211. A drain terminal of the first FET may be configured to be connected to a drain terminal of the second FET. A gate terminal of the first FET may be configured to be connected to the controller 299 so that the first charge prevention switch 271a may receive the control signal A from the controller 299. A source terminal of the second FET may be configured to be connected to the output terminal (the second terminal 241b and the fourth terminal 242b) of the charging circuit 240 and an anode of the load circuit 260. A gate terminal of the second FET may be configured to be connected to the controller 299 so that the first discharge prevention switch 271b may receive the control signal B from the controller 299. The first diode may be connected between the two terminals (the drain terminal and the source terminal) of the first FET, and configured to allow a current to flow only from the first battery 211 toward the first discharge prevention switch 271b. The second diode may be connected between the two terminals (the drain terminal and the source terminal) of the second FET, and may be configured to allow a current to flow only from the charging circuit 240 toward the first charge prevention switch 271a. According to the above-described configuration, regardless of the state of the first charge prevention switch 271a, when the first discharge prevention switch 271b is in a closed state, the power of the first battery 211 may be discharged. Regardless of the state of the first discharge prevention switch 271b, when the first charge prevention switch 271a is in a closed state, power may be charged to the first battery 211.

According to an embodiment, the second current limiting circuit 272 may be configured to prevent power from being charged to or discharged from the second battery 212. For example, the second current limiting circuit 272 may include a second charge prevention switch 272a and a second discharge prevention switch 272b connected in series to the anode of the second battery 212. The second charge prevention switch 272a may be opened or closed according to a voltage level of a control signal C received from the controller 299. For example, when a voltage of the control signal C is a high level higher than a designated threshold voltage value, the second charge prevention switch 272a is in a closed state, and as a result, power may be charged to the second battery 212. When the voltage of the control signal C is a low level lower than the designated threshold voltage value, the second charge prevention switch 272a is in an opened state, and as a result, power may be prevented from being charged to the second battery 212. The second discharge prevention switch 272b may be opened or closed according to a voltage level of a control signal D received from the controller 299. For example, when a voltage of the control signal D is a high level higher than the designated threshold voltage value, the second discharge prevention switch 272b is in a closed state, and the power of the second battery 212 may be discharged. When the voltage of the control signal D is a low level lower than the designated threshold voltage value, the second discharge prevention switch 272b is in an opened state, and as a result, the power of the second battery 212 may be prevented from being discharged.

According to an embodiment, the second charge prevention switch 272a may include a third FET and a third diode. The second discharge prevention switch 272b may include a fourth FET and a fourth diode. A source terminal of the third FET may be configured to be connected to the anode of the second battery 212. A drain terminal of the third FET may be configured to be connected to a drain terminal of the fourth FET. A gate terminal of the third FET may be configured to be connected to the controller 299 so that the second charge prevention switch 272a may receive the control signal C from the controller 299. A source terminal of the fourth FET may be configured to be connected to the output terminal (the second terminal 241b and the fourth terminal 242b) of the charging circuit 240 and the anode of the load circuit 260. A gate terminal of the fourth FET may be configured to be connected to the controller 299 so that the second discharge prevention switch 272b may receive the control signal D from the controller 299. The third diode may be connected between the two terminals (the drain terminal and the source terminal) of the third FET, and configured to allow a current to flow only from the second battery 212 toward the second discharge prevention switch 272b. The fourth diode may be connected between the two terminals (the drain terminal and the source terminal) of the fourth FET, and may be configured to allow a current to flow only from the charging circuit 240 toward the second charge prevention switch 272a. According to the above-described configuration, regardless of the state of the second charge prevention switch 272a, when the second discharge prevention switch 272b is in a closed state, the power of the second battery 212 may be discharged. Regardless of the state of the second discharge prevention switch 272b, when the second charge prevention switch 272a is in a closed state, power may be charged to the second battery 212.

The second power conversion circuit (e.g., a buck boost converter) 242 may include a third terminal 242a and a fourth terminal 242b through which power is input and output. Here, "third" and "fourth" are only prefixes used to be distinguished from the terminals 241a and 241b configured in the first power conversion circuit 241, and do not limit the second power conversion circuit 242 in other aspects. The third terminal 242a may be electrically connected to the power terminal 221 of the connector 220. The fourth terminal 242b may be electrically connected to the battery module 210 and the load circuit 260. According to an embodiment, the anode of the first battery 211, the anode of the second battery 212, and the anode of the load circuit 260 may be connected in parallel to a fourth terminal 242b of the second power conversion circuit 242. According to an embodiment, the anode of the first battery 211 and the anode of the second battery 212 may be connected to the fourth terminal 242b of the second power conversion circuit 242 via the switch 280. The anode of the load circuit 260 may be connected to the second terminal 241b of the first power conversion circuit 241 via the switch 280.

The first power conversion circuit 241 may be configured to convert a voltage value of a power signal input from the first terminal 241a into a fixed voltage conversion ratio (the ratio of the voltage value of the output power signal to the voltage value of the input power signal) and output the converted voltage value to the second terminal 241b. The first power conversion circuit 241 may include a circuit (e.g., a switched capacitor voltage divider (SCVD)) configured such that the ratio of output power to input power is '1'. For example, the first power conversion circuit 241 may convert the voltage value of the power signal received from the power terminal 221 through the first terminal 241a into N to 1 (e.g., bucking the voltage by 1/N times) and the current value into 1 to N (e.g., increasing the current by N times), and output the power signal to the battery module 210 and/or the load circuit 260 through the second terminal 241b.

The second power conversion circuit 242 may convert the voltage value and/or current value of the power signal input from the third terminal 242a and output the converted power signal to the fourth terminal 242b. For example, the second power conversion circuit 242 may buck or boost the voltage value of the power signal received from the power terminal 221 through the third terminal 242a and output the power signal to the battery module 210 and the load circuit 260 through the fourth terminal 242b.

The first power conversion circuit 241 may be configured to be connected to the load circuit 260 via the switch 280. The second power conversion circuit 242 may be configured to be connected to the battery module 210 via the switch 280. For example, when the switch 280 is in an opened state, the supply of power from the first power conversion circuit 241 to the load circuit 260 may be cut off, and the supply of power from the second power conversion circuit 242 to the battery module 210 may be cut off. When the switch 280 is in a closed state, power may be supplied from the first power conversion circuit 241 to the load circuit 260. When the switch 280 is in a closed state, power may be supplied from the second power conversion circuit 242 to the battery module 210. Regardless of the state of the switch 280, the power receiving device 201 may be configured such that power is supplied from the first power conversion circuit 241 to the battery module 210 and from the second power conversion circuit 242 to the load circuit 260.

According to an embodiment, the switch 280 may be omitted from the configuration of the power receiving device 201. For example, the anode of the first battery 211, the anode of the second battery 212, and the anode of the load circuit 260 may be connected in parallel to the second terminal 241b and the fourth terminal 242b, respectively. Accordingly, the current output from the second terminal 241b or the fourth terminal 242b may be distributed to the battery module 210 and the load circuit 260.

The communication circuit (e.g., a USB controller) 250 may identify a type of external device connected to the connector 220 based on the data received from the external device through the data terminal 222. The communication circuit 250 may transmit identification information indicating the type of external device to the controller 299. The controller 299 may perform communication with an external device via the communication circuit 250 according to a power delivery (PD) communication protocol based on the identification information, thereby performing an operation of negotiating, between the two devices 201 and 202, a source supplying power and a sink receiving power. For example, since the power supply device 202 is recognized as a travel adapter (TA), the power supply device 202 may be determined as the source and the power receiving device 201 may be determined as the sink. After such negotiation, the controller 299 may perform communication with the power supply device 202 via the communication circuit 250 according to the PD communication protocol (e.g., power data objects (PDO) or programmable power supply (PPS)), thereby performing an operation of negotiating the current value and/or voltage value of the power signal to be transmitted from the power supply device 202. The controller 299 may control one of the power conversion circuits 241 and 242 to output the power signal having the voltage value and the current value determined by the negotiation result. For example, when the power supply device 202 is confirmed as a PPS-supported model, the controller 299 may deactivate the second power conversion circuit 242, activate the first power conversion circuit 241, and supply power to the battery module 210 and the load circuit 260 using the activated first power conversion circuit 241. As another example, when the power supply device 202 is confirmed as a PPS-unsupported model, the controller 299 may deactivate the first power conversion circuit 241, activate the second power conversion circuit 242, and supply power to the battery module 210 and the load circuit 260 using the activated second power conversion circuit 242.

According to an embodiment, the controller 299 may be a component (e.g., a microcontroller unit (MCU)) of a PMIC (e.g., the power management module 188) or a component (e.g., an application processor) of a processor (e.g., the processor 120).

According to an embodiment, at least one of the first power conversion circuit 241, the second power conversion circuit 242, the communication circuit 250, and the controller 299 may be a component integrated into a specific chip (e.g., an interface-integrated (IF) PMIC).

According to an embodiment, the power receiving device 201 may have a multi-foldable housing structure. For example, the power receiving device 201 may include a first housing and a second housing rotatably coupled thereto. The first battery 211 and the first current limiting circuit 271 may be arranged in the first housing. The second battery 212 and the second current limiting circuit 272 may be arranged in the second housing.

A large amount of power may be consumed in order to execute applications requiring high-specification performance (e.g., games, video recording) in the power receiving device 201. When the battery module 210 is being charged, the temperature rise inside the battery may be exacerbated by the heat generated while power is consumed in the load circuit 260. According to an embodiment of the present disclosure, while the first power conversion circuit 241 is being used to charge the battery module 210, a so-called pass through mode (in other words, low heat generation mode) may be performed in the power receiving device 201 to allow the power receiving device 201 to exhibit high performance while suppressing the temperature rise inside the power receiving device 201.

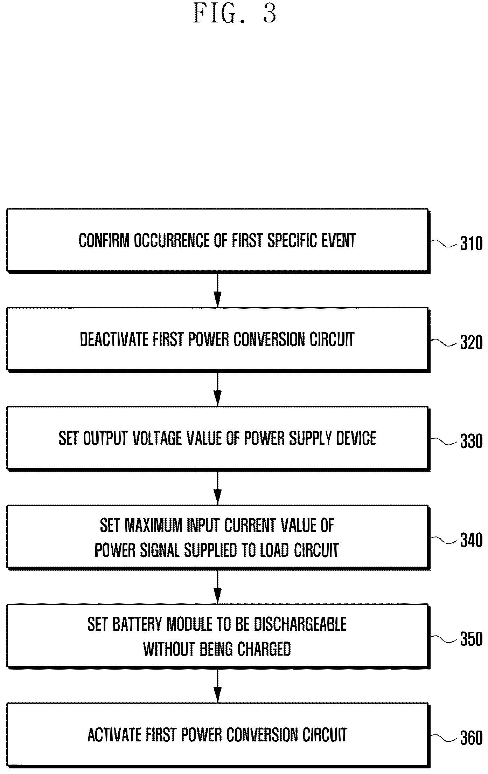

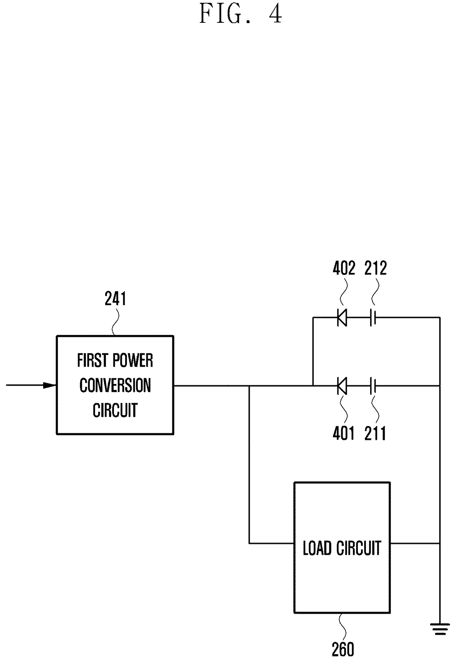

FIG. 3 is a flowchart illustrating operations for causing the power receiving device 201 to perform the pass through mode while the first power conversion circuit 241 is being used to convert power input from the power supply device 202, according to an embodiment. FIG. 4 is a diagram illustrating a state of the power receiving device 201 set to the pass through mode.

In operation 310, the controller 299 may confirm that a first specific event has occurred in the power receiving device 201. For example, the occurrence of the first specific event may include execution of a designated application (e.g., a game application, a camera application).

In operation 320, the controller 299 may control the first power conversion circuit 241 to stop the power conversion based on the occurrence of the first specific event, thereby deactivating the first power conversion circuit 241.

In operation 330, the controller 299 may perform communication with the power supply device 202 via the communication circuit 250 to set an output voltage value of a power signal to be output by the power supply device 202. According to an embodiment, the controller 299 may determine, as the output voltage value, a value greater than a value designated as an offset. For example, the controller 299 may measure the input voltage (VBAT) of the battery module 210. The controller 299 may determine a value greater than a value (e.g., VBAT*N + 200 mV) obtained by multiplying the input voltage (VBAT) by N as the output voltage value. The controller 299 may transmit information representing the determined output voltage value to the power supply device 202 via the communication circuit 250. The power supply device 202 may set the output voltage value determined by the controller 299 as the output voltage of the power signal to be output to the power receiving device 201.

In operation 340, the controller 299 may set a maximum input current value of power to be supplied to the load circuit 260 through the input terminal 260a of the load circuit 260. For example, during the power negotiation between the two devices 201 and 202, the controller 299 may receive, via the communication circuit 250, information indicating the maximum output current value (e.g., rated current value) that the power supply device 202 is capable of outputting. When the current (ILOAD) flowing to the input terminal 260a of the load circuit 260 is greater than or equal to the maximum output current value for a predetermined period of time, the power supply device 202 may stop supplying power. The controller 299 may determine, as the maximum input current value, a value obtained by multiplying the maximum output current value (e.g., 3A or 6A) that the power supply device 202 is capable of outputting by N.

In operation 350, the controller 299 may set the battery module 210 to be dischargeable without being charged. For example, the controller 299 may set the first current limiting circuit 271 to a first switching state 401 (see FIG. 4) so that the first battery 211 is dischargeable without being charged. As illustrated in FIG. 2, the first switching state 401 is defined as a state in which the first charge prevention switch 271a is opened and the first discharge prevention switch 271b is closed. The controller 299 may set the second current limiting circuit 272 to a second switching state 402 (see FIG. 4) so that the second battery 212 is dischargeable without being charged. As illustrated in FIG. 2, the second switching state 402 is defined as a state in which the second charge prevention switch 272a is opened and the second discharge prevention switch 272b is closed. By blocking charging to the battery module 210, the output voltage value and/or the maximum input current value may be set regardless of the state of charge of the battery module 210. For example, the output voltage value may be set to a voltage value higher than the battery voltage (VBAT), and the maximum input current value may be set to a current value higher than the threshold current value of the battery module 210. Accordingly, the power receiving device 201 may receive a current from the power supply device 202 up to the maximum output current value that the power supply device 202 is capable of outputting, without being limited to the threshold current value of the battery module 210. A relatively large amount of power may be supplied to the load circuit 260, the heat generation in the power receiving device 201 may be minimized, and the power receiving device 201 may exhibit high performance. The threshold current value of the battery module 210 may be, for example, the sum of a first threshold current value set for the first battery 211 and a second threshold current value set for the second battery 212.

The execution order of operations 330, 340, and 350 is not limited to the order illustrated in FIG. 3. For example, operations 340 or 350 may be performed before operation 330 or may be performed simultaneously with operation 330. Operations 330, 340, and 350 may be collectively referred to as operations for setting the power receiving device 201 to the pass through mode.

After operations 340, 350, and 350 are performed, the controller 299 may activate the first power conversion circuit 241 in operation 360 to enable the power receiving device 201 to perform the pass through mode.

According to an embodiment, the first power conversion circuit 241 may include a capacitor having a characteristic of storing electrical energy and a switch for controlling a cycle for charging and discharging power in the capacitor. The controller 299 may set a switching frequency for opening and closing the switch in the first power conversion circuit 241 based on the maximum input current value. For example, information indicating an optimized switching frequency that maximizes power conversion efficiency for each current value may be stored in the memory of the power receiving device 201. For example, a proportional relationship may be established between the current value and the switching frequency. Before activating the first power conversion circuit 241 (i.e., before performing operation 360), the controller 299 may confirm a switching frequency corresponding to the maximum input current value from the information stored in the memory and set the confirmed switching frequency as the switching frequency of the switch configured the first power conversion circuit 241.

According to an embodiment, while the power supply device 202 is connected to the connector 220, a current may flow backward from the power receiving device 201 to the power supply device 202 through the power terminal 221. The reverse current may occur when the input voltage (VBUS) of the power terminal 221 is lower than a battery voltage (VBAT)*N. The power receiving device 201 may prevent a reverse current by setting the battery module 210 to block discharge. When the first power conversion circuit 241 switches from an inactive state to an active state to allow the power receiving device 201 to perform the pass through mode, the input voltage (VBUS) may become momentarily lower than the battery voltage (VBAT)*N. Accordingly, the controller 299 may deactivate the function (e.g., reverse current protection) for blocking the discharge of the battery module 210 to stably supply power to the load circuit 260 while the power receiving device 201 performs the pass through mode (or before performing operation 360).

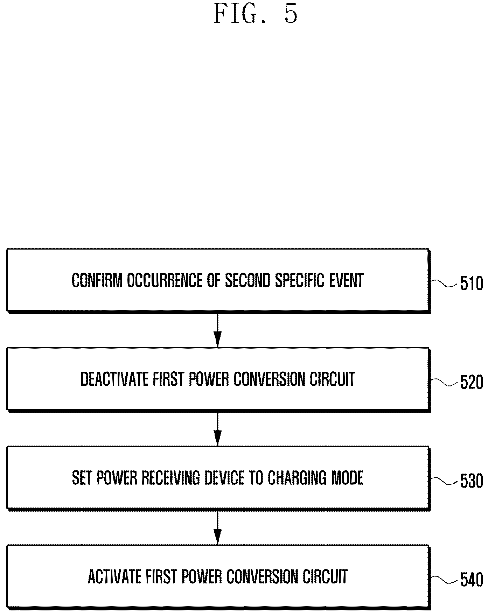

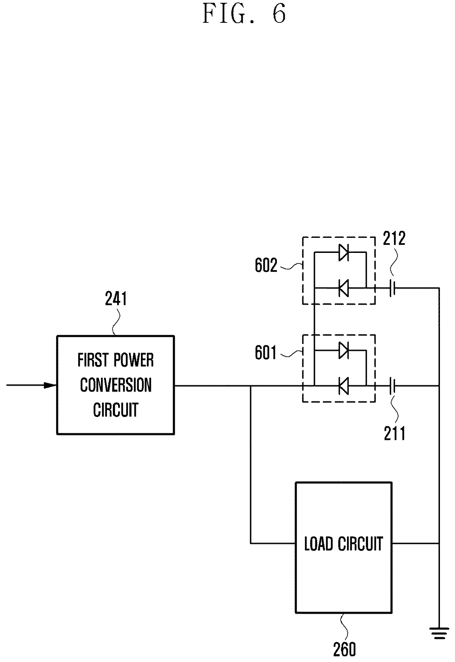

FIG. 5 is a flowchart illustrating operations for causing the power receiving device 201 to release the pass through mode and to perform the charging mode while the first power conversion circuit 241 is being used to convert the power input from the power supply device 202, according to an embodiment. FIG. 6 is a diagram illustrating a state of the power receiving device 201 set to the charging mode.

In operation 510, the controller 299 may confirm that a second specific event has occurred in the power receiving device 201. For example, the occurrence of the second specific event may include a termination of execution of a designated application (e.g., a game application, a camera application).

In operation 520, the controller 299 may control the first power conversion circuit 241 to stop the power conversion based on the occurrence of the second specific event, thereby deactivating the first power conversion circuit 241.

In operation 530, the controller 299 may set the power receiving device 201 to the charging mode after deactivating the first power conversion circuit 241. The operation of setting the power receiving device 201 to the charging mode may include an operation of setting the battery module 210 to be chargeable and dischargeable. For example, the controller 299 may set the first current limiting circuit 271 to a third switching state 601 (see FIG. 6) so that the first battery 211 is chargeable and dischargeable. As illustrated in FIG. 2, the third switching state 601 is defined as a state in which the first charge prevention switch 271a is closed and the first discharge prevention switch 271b is opened. The controller 299 may set the second current limiting circuit 272 to a fourth switching state 602 (see FIG. 6) so that the second battery 212 is chargeable and dischargeable. As illustrated in FIG. 2, the fourth switching state 602 is defined as a state in which the second charge prevention switch 272a is closed and the second discharge prevention switch 272b is closed. The operation of setting the power receiving device 201 to the charging mode may further include at least one of an operation of resetting the output voltage value of the power supply device 202 (e.g., resetting the output voltage value to VBAT*N), an operation of resetting the maximum input current value of the power signal supplied to the load circuit 260 (e.g., resetting the maximum input current value to the threshold current value*N of the battery module 210, an operation of resetting the switching frequency of the first power conversion circuit 241, and an operation of activating a function for protecting the power supply device 202 from the reverse current.

After operation 530 is performed, in operation 540, the controller 299 may activate the first power conversion circuit 241 to cause the power receiving device 201 to perform the charging mode.

While the pass through mode is being performed in the power receiving device 201, when the power consumed by the load circuit 260 is greater than the power supplied to the load circuit 260, the battery module 210 may be discharged. According to an embodiment of the present disclosure, an operation of regulating the input voltage (VBUS) to suppress the discharge of the battery module 210 and maintain the state of charge of the battery module 210 may be performed in the power receiving device 201.

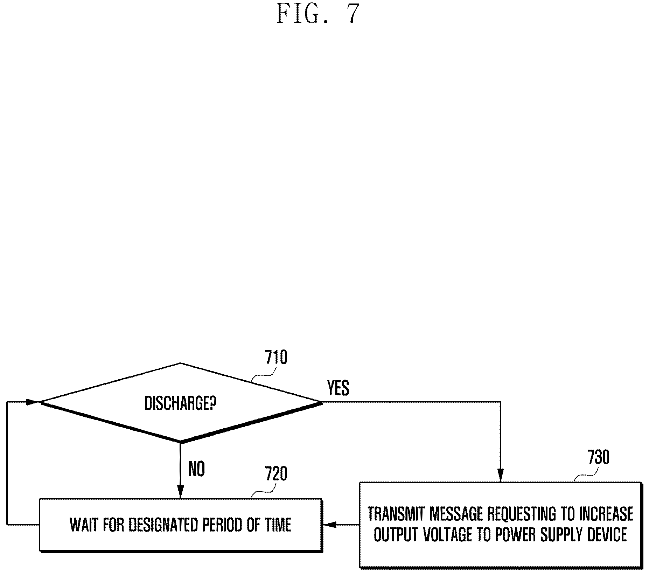

FIG. 7 is a flowchart illustrating operations for regulating the input voltage (VBUS) according to the state of charge of the battery module 210 while the pass through mode is being performed in the power receiving device 201, according to an embodiment.

In operation 710, the controller 299 may measure the current (IBAT) at the first battery terminal 210a of the battery module 210 and determine whether the battery module 210 is being discharged based on the measurement result. For example, when it is confirmed that the current (IBAT) is output from the first battery terminal 210a, the controller 299 may determine that the battery module 210 is discharged. As another example, when the current (IBAT) greater than or equal to the reference value designated at the first battery terminal 210a is output from the first battery terminal 210a, the controller 299 may determine that the battery module 210 is discharged. When it is confirmed that the current (IBAT) is not output from the first battery terminal 210a, or when it is confirmed that the current (IBAT) less than the reference value is output even though the current (IBAT) is output, the controller 299 may determine that the battery module 210 is not discharged and is maintained in the state of charge.

In operation 710, when it is determined that no discharge has occurred, in operation 720, the controller 299 may wait for a designated period of time (e.g., 100 ms or 200 ms) and then perform operation 710 again.

In operation 710, when it is determined that the discharge has occurred, in operation 730, the controller 299 may transmit, via the communication circuit 250, to the power supply device 202 a message (e.g., a message requesting to increase the output voltage by one step by a designated unit (e.g., approximately 20 mV)) requesting to increase the voltage of the power signal output from the power supply device 202. After transmitting the request message to the power supply device 202, the controller 299 may sequentially perform operations 720 and 710.

According to an embodiment, the operations of FIGS. 3, 5, and 7 described above may be equally applied even to a power receiving device having a pair of a current limiting circuit and a battery.

According to an embodiment, the electronic device (e.g., the power receiving device 201) may include: a connector (e.g., the connector 220) including a power terminal and a data terminal; a communication circuit (e.g., the communication circuit 250) connected to the data terminal; a power conversion circuit (e.g., the first power conversion circuit 241) configured to lower the voltage of a power signal input from a power supply device through the power terminal by 1/N times and output a current increased by N times; a battery module including a pair of a first battery (e.g., the first battery 211) and a first current limiting circuit (e.g., the first current limiting circuit 271) and another pair of a second battery (e.g., the second battery 212) and a second current limiting circuit (e.g., the second current limiting circuit 272); and a load circuit (e.g., the load circuit 260). The load circuit may include a controller (e.g., the controller 299) connected to the communication circuit, the power conversion circuit, the first current limiting circuit, and the second current limiting circuit. The first battery may be connected to the output terminal of the power conversion circuit via the first current limiting circuit. The second battery may be connected to the output terminal of the power conversion circuit via the second current limiting circuit. The load circuit may be connected in parallel to the output terminal of the power conversion circuit together with the first battery and the second battery. While the power conversion circuit is used to charge the first battery and the second battery, the controller may deactivate the power conversion circuit based on the occurrence of the first specific event. The controller may perform communication with the power supply device via the communication circuit to set the output voltage value of the power signal to be output by the power supply device. The controller may set a maximum input current value of a power signal to be supplied to the load circuit via the power conversion circuit. The controller may set the first current limiting circuit to the first switching state so that the first battery is dischargeable without being charged. The controller may set the second current limiting circuit to the second switching state so that the second battery is dischargeable without being charged. The controller may activate the power conversion circuit after the first current limiting circuit is set to the first switching state and the second current limiting circuit is set to the second switching state.

The controller may deactivate a protection function that prevents a reverse current from being generated from the battery module to the power terminal and set a switching frequency for power conversion in the power conversion circuit based on the set maximum input current value. The controller may activate the power conversion circuit based on the deactivated protection function and the set switching frequency.

The controller may set the output voltage value to be higher than a value obtained by multiplying the input voltage of the battery module by N.

The controller may receive information indicating the maximum output current value that the power supply device is capable of outputting from the power supply device via the communication circuit. The controller may set the maximum input current value based on the maximum output current value.

The controller may set the maximum input current value to the maximum output current value * N.

The controller may recognize the execution of a designated application as the first specific event.

While the first current limiting circuit is set to the first switching state and the second current limiting circuit is set to the second switching state, the controller may deactivate the power conversion circuit based on the occurrence of the second specific event. The controller may set the first current limiting circuit to the third switching state so that the first battery is chargeable and dischargeable. The controller may set the second current limiting circuit to the fourth switching state so that the second battery is chargeable and dischargeable. The controller may activate the power conversion circuit after the first current limiting circuit is set to the third switching state and the second current limiting circuit is set to the fourth switching state.

When the protection function that prevents the reverse current from being generated from the battery module to the power terminal is deactivated, the controller may activate the power conversion circuit after activating the protection function.

The controller may recognize the termination of the execution of a designated application as the second specific event.

The controller may transmit, via the communication circuit to the power supply device, a message requesting to increase the output voltage value based on the power of the battery module being discharged to the load circuit.

According to an embodiment, an electronic device (e.g., the power receiving device 201) may include a connector (e.g., the connector 220) including a power terminal and a data terminal; a communication circuit (e.g., the communication circuit 250) connected to the data terminal; a power conversion circuit (e.g., the first power conversion circuit 241) configured to lower the voltage of a power signal input from a power supply device through the power terminal by 1/N times and output a current increased by N times; a battery module (e.g., the battery module 210) including a pair of a first battery and first current limiting circuit and another pair of a second battery and a second current limiting circuit; a load circuit (e.g., the load circuit 260) including a controller (e.g., the controller 299) connected to the communication circuit, the power conversion circuit, the first current limiting circuit, and the second current limiting circuit; and a memory connected to the controller and storing instructions. The first battery may be connected to the output terminal of the power conversion circuit via the first current limiting circuit. The second battery may be connected to the output terminal of the power conversion circuit via the second current limiting circuit. The load circuit may be connected in parallel to the output terminal of the power conversion circuit together with the first battery and the second battery. When executed by the controller, the instructions may cause the electronic device to deactivate the power conversion circuit based on the occurrence of the first specific event (310) while the power conversion circuit is used to charge the first battery and the second battery. The instructions may cause the electronic device to perform communication with the power supply device via the communication circuit to set the output voltage value of the power signal to be output by the power supply device. The instructions may cause the electronic device to set a maximum input current value of a power signal to be supplied to the load circuit via the power conversion circuit. The instructions may cause the electronic device to set the first current limiting circuit to the first switching state so that the first battery is dischargeable without being charged. The instructions may cause the electronic device to set the second current limiting circuit to the second switching state so that the second battery is dischargeable without being charged. The instructions may cause the electronic device to activate the power conversion circuit after the first current limiting circuit is set to the first switching state and the second current limiting circuit is set to the second switching state.

When executed by the controller, the instructions may cause the electronic device to deactivate a protection function that prevents the reverse current from being generated from the battery module to the power terminal, and to set the switching frequency for power conversion in the power conversion circuit based on the set maximum input current value. The instructions may cause the electronic device to activate the power conversion circuit based on the deactivated protection function and the set switching frequency.

When executed by the controller, the instructions may cause the electronic device to set the output voltage value to be higher than a value obtained by multiplying the input voltage of the battery module by N.

When executed by the controller, the instructions may cause the electronic device to receive the information from the power supply device via the communication circuit indicating the maximum output current value that the power supply device is capable of outputting, and to set the maximum input current value based on the maximum output current value.

When executed by the controller, the instructions may cause the electronic device to set the maximum input current value to the maximum output current value * N.

Effects which may be achieved by the present disclosure are not limited to the effects described above. Other effects that are not mentioned may be obviously understood by those skilled in the art to which the present disclosure pertains from the following description.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a connector including a power terminal and a data terminal;
a communication circuit connected to the data terminal;
a power conversion circuit configured to lower a voltage of a power signal input from a power supply device through the power terminal by 1/N times and output a current increased by N times;
a battery module including a pair of a first battery and a first current limiting circuit and another pair of a second battery and a second current limiting circuit;
a controller; and
a load circuit,
wherein the first battery is connected to an output terminal of the power conversion circuit via the first current limiting circuit,
the second battery is connected to an output terminal of the power conversion circuit via the second current limiting circuit,
the load circuit is connected in parallel to the output terminal of the power conversion circuit together with the first battery and the second battery,
the controller is configured to, based on an occurrence of a first specific event while the power conversion circuit is used to charge the first battery and the second battery,
deactivate the power conversion circuit,
perform communication with the power supply device via the communication circuit to set an output voltage value of a power signal to be output by the power supply device,
set a maximum input current value of a power signal to be supplied to the load circuit via the power conversion circuit,
set the first current limiting circuit to a first switching state so that the first battery is dischargeable without being charged,
set the second current limiting circuit to a second switching state so that the second battery is dischargeable without being charged, and
activate the power conversion circuit after the first current limiting circuit is set to the first switching state and the second current limiting circuit is set to the second switching state.

2. The electronic device of claim 1, wherein the controller is configured to deactivate a protection function that prevents a reverse current from being generated from the battery module to the power terminal and sets a switching frequency for power conversion in the power conversion circuit based on the set maximum input current value, and
activate the power conversion circuit based on the deactivated protection function and the set switching frequency.

3. The electronic device of claim 1, wherein the controller is configured to set the output voltage value to be higher than a value obtained by multiplying an input voltage of the battery module by N.

4. The electronic device of claim 1, wherein the controller is configured to receive information indicating the maximum output current value that the power supply device is capable of outputting from the power supply device via the communication circuit, and
set a maximum input current value based on the maximum output current value.

5. The electronic device of claim 4, wherein the controller is configured to set the maximum input current value to the maximum output current value * N.

6. The electronic device of claim 1, wherein the controller is configured to recognize an execution of a designated application as the first specific event.

7. The electronic device of claim 1, wherein the controller is configured to deactivate the power conversion circuit based on an occurrence of a second specific event while the first current limiting circuit is set to the first switching state and the second current limiting circuit is set to the second switching state,
set the first current limiting circuit to a third switching state so that the first battery is chargeable and dischargeable,
set the second current limiting circuit to a fourth switching state so that the second battery is chargeable and dischargeable, and
activate the power conversion circuit after the first current limiting circuit is set to the third switching state and the second current limiting circuit is set to the fourth switching state.

8. The electronic device of claim 7, wherein, when a protection function that prevents a reverse current from being generated from the battery module to the power terminal is deactivated, the controller is configured to activate the power conversion circuit after activating the protection function.

9. The electronic device of claim 7, wherein the controller is configured to recognize a termination of execution of a designated application as the second specific event.

10. The electronic device of claim 1, wherein the controller is configured to transmit, via the communication circuit to the power supply device, a message requesting to increase the output voltage value based on the power of the battery module being discharged to the load circuit.

11. An electronic device, comprising:
a connector including a power terminal and a data terminal;
a communication circuit connected to the data terminal;
a power conversion circuit configured to lower a voltage of a power signal input from a power supply device through the power terminal by 1/N times and output a current increased by N times;
a battery module including a pair of a first battery and a first current limiting circuit and another pair of a second battery and a second current limiting circuit;
a controller;
a load circuit; and
a memory storing instructions,
wherein the first battery is connected to an output terminal of the power conversion circuit via the first current limiting circuit,
the second battery is connected to an output terminal of the power conversion circuit via the second current limiting circuit,
the load circuit is connected in parallel to the output terminal of the power conversion circuit together with the first battery and the second battery,
when executed by the controller, the instructions causes the electronic device to deactivate the power conversion circuit based on an occurrence of a first specific event while the power conversion circuit is used to charge the first battery and the second battery,
perform communication with the power supply device via the communication circuit to set an output voltage value of a power signal to be output by the power supply device,
set a maximum input current value of a power signal to be supplied to the load circuit via the power conversion circuit,
set the first current limiting circuit to a first switching state so that the first battery is dischargeable without being charged,
set the second current limiting circuit to a second switching state so that the second battery is dischargeable without being charged, and
activate the power conversion circuit after the first current limiting circuit is set to the first switching state and the second current limiting circuit is set to the second switching state.

12. The electronic device of claim 11, wherein, when executed by the controller, the instructions causes the electronic device to deactivate a protection function that prevents a reverse current from being generated from the battery module to the power terminal, and set a switching frequency for power conversion in the power conversion circuit based on the set maximum input current value, and
activate the power conversion circuit based on the deactivated protection function and the set switching frequency.

13. The electronic device of claim 11, wherein, when executed by the controller, the instructions causes the electronic device to set the output voltage value to be higher than a value obtained by multiplying the input voltage of the battery module by N.

14. The electronic device of claim 11, wherein, when executed by the controller, the instructions causes the electronic device to receive information indicating a maximum output current value that the power supply device is capable of outputting from the power supply device via the communication circuit, and
set a maximum input current value based on the maximum output current value.

15. The electronic device of claim 14, wherein, when executed by the controller, the instructions causes the electronic device to set the maximum input current value to the maximum output current value * N.
